# EUROPEAN PATENT APPLICATION

(11) **EP 3 786 172 A1**
(43) Date of publication of application: **03.03.2021**
(21) Application number: 19195005.4
(22) Date of filing: 02.09.2019
(51) Int. Cl.: C07G 1/00, C08G 8/00

(54) **MULTIFUNCTIONAL CYCLIC ORGANIC CARBONATES AS CURING AGENTS FOR ORGANIC COMPOUNDS HAVING HYDROXYL GROUPS**

(71) Applicant: Prefere Resins Holding GmbH, 15537 Erkner (DE)
(72) Inventor: FLIEDNER, Elke, Dr., 12527 BERLIN (DE)
(74) Representative: Deckers, Hellmuth Alexander

(57) **Abstract**

The invention relates to a curable mixture comprising at least one organic compound having phenolic hydroxyl groups and at least one multifunctional cyclic organic carbonate as crosslinking agent, to a method of curing the said organic compound having phenolic hydroxyl groups with at least one multifunctional cyclic organic carbonate, and to binders for coating compositions, adhesive compositions, or filler compositions comprising at least one organic compound having phenolic hydroxyl groups and at least one multifunctional cyclic organic carbonate.

## Description

### Field of the Invention

The invention relates to a curable mixture comprising at least one organic compound having phenolic hydroxyl groups and at least one multifunctional cyclic organic carbonate as curing agent, to a method of curing the said organic compound having phenolic hydroxyl groups with at least one multifunctional cyclic organic carbonate, and to binders for coating compositions, adhesive compositions, or filler compositions comprising at least one organic compound having phenolic hydroxyl groups and at least one multifunctional cyclic organic carbonate.

### Background of the Invention

Novolaks and also lignin which are organic compounds having phenolic hydroxyl groups are usually cured with curing or crosslinking agents that include formaldehyde or compounds that split off formaldehyde such as trioxane, paraformaldehyde, hexamethylenetetramine and also resoles that can also serve as formaldehyde donors. Other known crosslinkers or hardeners are bisoxazolines, benzoxazines and oxazolidines, see L. Pilato, "Phenolic Resins: A Century of Progress", Heidelberg, 2010. Novolaks can also be cured with triazine hardeners prepared from melamine or benzoguanamine and formaldehyde using a ratio of the amount of substance of formaldehyde, *n*(FA), and the amount of substance of triazine, *n*(T), *n*(FA)/*n*(T) of at least 4 mol/mol. See "Reactive Polymers - Fundamentals and Applications", J.K.Fink, Norwich, NY, 2005,p. 263. Diisocyanates can also be used for crosslinking of novolaks, see, e.g., A. Tejado et al., "Isocyanate Curing of Novolak-Type Ligno-Phenol-Formaldehyde Resins", Industrial Crops and Products 27 (2008), pp. 208 to 213. Epoxides having a functionality of at least two can also be used as curing agent.

Reactions of cyclic organic carbonates with phenols have been described, i. a. in "Reactive Applications of Cyclic Alkylene Carbonates" by John H. Clements, Ind. Eng. Chem. Res. 2003, 42, pp. 663 to 674. The cyclic alkylene carbonates are used to alkylate active hydrogen-containing phenols and phenol derivatives, as disclosed in US patents 4,261,922 A and 5,679,871 A.

Mixed reaction products of phenol, triethanolamine, propylene carbonate and imidazole have been described in CN 106589320 A as curing agents for epoxy resins. Propylene carbonate has been described as a hardener for a composition comprising a fire resistant filler and an aqueous solution of an alkali metal silicate as binder in DE 2710536 A1. Crosslinked copolymers have been known from US 4,767,620 A which are produced from monomers containing glycerol carbonate groups, crosslinking monomers and optionally other monoethylenically unsaturated monomers, the copolymers forming principally spherical porous particles which are suitable as carrier materials for the immobilisation of biologically active substances. Foundry sand compositions have been described in EP 0 041 774 A1 which comprise parti-culate sand, aqueous sodium silicate as binder and an alkylene carbonate as hardener. In EP 0 146 499 A2, phenolic resin foams are described which are prepared from a mixture of a phenolic resole, and alkali and a lactone, an ester or a cyclic aliphatic carbonate, curing the phenolic resoles under alkaline conditions, and foaming this mixture by introducing air or incorporating a readily volatile liquid blowing agent, and allowing the foam to cure. In EP 0 149 156 A2, a process for curing compositions is disclosed which comprises an active hydrogen-containing material which is selected from the group consisting of epoxy polymers, acrylic polymers, polyurethanes, and polyesters, and a curing agent which has the structure of a blocked isocyanate, but instead of the common case of a reaction product of a diisocyanate and two molecules of a blocking agent, this is a reaction product of a polyfunctional amine and two molecules of an organic carbonate. In EP 0 905 208 A1, corresponding to US 5,961,802 A, US 5,994,469 A, and US 6,184,273 B1, a composition is described which comprises a resin having latent primary amine functionality, obtained by reacting a cyclic anhydride with an amine compound having two primary amine groups and one secondary amine group. This latent amine compound is combined with a compound or resin having a plurality of cyclic carbonate groups in a crosslinkable coating composition. The multifunctional cyclocarbonate compounds can be obtained from multifunctional epoxides by reaction thereof with carbon dioxide under pressure, or with dialkyl or diaryl carbonates. There is no mention or suggestion of combining multifunctional cyclocarbonate compounds with novolaks. In FR 2 382 290 A1, self-curing moulding compositions for casting moulds and cores are described which consist of a fire resistant filler, an aqueous solution of an alkali metal silicate as binder, and propylene carbonate as hardener. In FR 2 497 788 A1, solid silicate foams are described which are produced from a composition which contains an alkali metal silicate, a foaming agent, ethylene carbonate as a hardener and water. In GB 900 506 A, hardenable compositions are disclosed which comprise biscarbonates made from bis-epoxidised dehydronorborneol and one or more hardeners therefor which are amines or amides, such as mono-, di- and tributylamine, p-phenylenediamine, bis(p-aminophenyl)methane, ethylenediamine, N,N-diethylethylene-diamine, diethylenetriamine, tetra(hydroxyethyl)diethylene-triamine, triethylenetetramine, tetraethylenepentamine, trimethylamine, diethylamine, triethanolamine, Mannich bases, piperidine, guanidine, phenyl guanidine and diphenyl guanidine, dicyandiamide, aniline-formaldehyde resins, polymers of amino-styrenes, polyamides e.g. from aliphatic polyamines and dimerised or trimerised unsaturated fatty acids, isocyanates, isothiocyanates, resorcinol, hydroquinone, bis(4-hydroxyphenyl)dimethylmethane, and quinone, phenol-aldehyde resins, oil-modified phenol-aldehyde resins, reaction products of aluminium alkoxides or phenolates with tautomeric reacting compounds of the acetoacetic ester type, Friedel-Crafts catalysts such as AlCl₃, SbCl₅, SnCl₄, ZnCl₂, BF₃ and their complexes with organic compounds, and phosphoric acid. In JP 2002-137201 A, a method for forming plywood is disclosed wherein an alkali catalysed phenolic resin is used as an adhesive while problems in quality such as a warp and undulation are solved by using an adhesive in which sodium bicarbonate and ethylene carbonate as a hardening accelerator are added to the alkali catalysed phenolic resin and an alkali catalysed phenolic resin is used which has been modified by incorporation of resorcinol or aminophenol. In JP 2002-236 364 A, a negative type resist composition for electron beam or X-rays is disclosed which contains a crosslinker which causes a crosslinking reaction under the action of an acid and a mixed solvent containing at least one propylene glycol monoalkyl ether carboxylate, at least one solvent selected from the group consisting of propyleneglycol monoalkyl ethers, alkyl lactates, and alkyl alkoxypropionates, and at least one of γ-butyrolactone, ethylene carbonate, and propylene carbonate. The crosslinker is preferably a partially etherified resole derived from alkylphenols. In JP Hei 04-37436 A, an inorganic self-curing moulding sand is disclosed which contains refractory particles of silica sand, sodium silicate as inorganic binder, propylene carbonate as curing agent and 1,2-butanediol diacetate or ethylene carbonate as curing adjustor. In JP Sho55-3450 A, a soil stabiliser is described which comprises an aqueous solution of sodium silicate as main component, and dimethyl carbonate as a curing agent, the stabiliser solution being impregnated into the soil, and hardened to stabilise the soil. In WO 2013/124 251 A2 (corresponding to US 9,193,862 B2 and EP 2817349 B1), a resin blend for composites for use in rotor blades of wind turbines is disclosed which comprises an epoxy resin, a cyclic carbonate and a hardener containing a polyalkoxypolyamine, an additional amine and a catalyst. In US 6,048,443 A, cathodic electrocoat compositions are disclosed which comprise a carbamate functional resin (a) with a cationic salting site, a crosslinking agent (b) reactive with the carbamate functional resin, and a carbonate curing agent (c) having a plurality of cyclocarbonate groups. The reactive groups of the crosslinking agent (b) include methylol - CH₂-OH or methylalkoxy groups -CH₂-O-Alk of aminoplast crosslinking agents or phenol-formaldehyde resins, isocyanate groups, siloxane groups, cyclocarbonate groups or acid anhydride groups. In WO 2006/002 814 A1, substantially spherical nanosponges are described which can be obtained by crosslinking cyclodextrins and their by-products with organic carbonates as crosslinkers and ultrasound treatment without a solvent; the organic carbonates are dicarbonates, and preferably, diphenyl carbonate. None of these references disclose crosslinking of phenolic resins, or of polymers which have phenolic hydroxyl groups.

### Object of the Invention

As the addition of formaldehyde to phenolic bodies is an equilibrium reaction, gaseous formaldehyde can be split off formaldehyde-cured phenolic resins or other phenolic bodies. It has been the object of the present invention to provide curing agents that react with phenolic hydroxyl groups under formation of chemical bonds to form crosslinked materials that have no propensity to split off formaldehyde.

### Summary of the Invention

This object has been realised by using multifunctional cyclic carbonates **C** as curing agents for organic compounds having phenolic hydroxyl groups. These multifunctional cyclic carbonates **C** can be used to crosslink novolaks **N**, tannins **T** and also biopolymers such as lignin **L** which both have phenolic hydroxyl groups and the latter also aliphatic hydroxyl groups which are derived from the phenylpropanoid monomers p-coumarylalcohol, coniferylalcohol and sinapylalcohol that are the precursors in the dehydrogenative polymerisation that leads to lignin formation in woody plants.

### Detailed Description of Preferred Embodiments

The multifunctional cyclic carbonates C according to the invention have at least two, and preferably from two to twelve, particularly preferably, from two to six, cyclocarbonate structures in their molecules. A cyclocarbonate structure obeys the formula 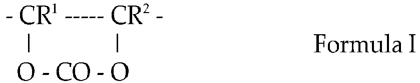 where R¹ and R² are independently of each other selected from the group consisting of H and alkyl groups having from one to six carbon atoms. They can be formed by insertion of carbon dioxide into multifunctional epoxides **E,** or by reaction of vicinal diols **D** having at least two sets of vicinal diol groups, with a dialkyl carbonate or a monofunctional cyclocarbonate such as ethylenecarbonate (1,3-dioxolan-2-one) or propylenecarbonate (4-methyl-1,3-dioxolan-2-one). Multifunctional epoxides **E** are preferably selected from low molar mass epoxide resins that have specific amounts of epoxide groups of from 0.2 mol/kg to 5.4 mol/kg, preferably novolak epoxy resins which may have average degrees of polymerisation which is equal to the average number of epoxide groups per molecule, of from 2.0 to 5.0, and preferably, a specific amount of epoxide groups of 4.5 mol/kg to 6 mol/kg. In these novolak epoxy resins, usually all phenolic hydroxyl groups have been converted to epoxide groups by reaction of the novolak with epichlorohydrin. Other multifunctional epoxides can be prepared by epoxidation of polyolefins which comprise residual carbon-carbon double bonds, preferably polymers made from alkadienes such as polybutadiene or polyisoprene, or copolymers made from alkenes and alkadienes such as ethylene-butadiene, ethylene-propylene-1,4-hexadiene, or styrenebutadiene copolymers. In these polymers and copolymers, reaction of olefinic unsaturations to epoxides is preferably made only partially. It is also possible to use epoxidised vegetable oils, such as epoxidised soy bean oil or epoxidised linseed oil. All these multifunctional epoxides can be converted to multifunctional carbonates **C** by insertion of carbon dioxide, preferably in the presence of a catalyst.

A further source of multifunctional epoxides are ethers of multifunctional alcohols and glycidol, which are reacted with carbon dioxide in the known way to produce the multifunctional cyclocarbonates. Examples of these multifunctional cyclocarbonates made by insertion of carbon dioxide into glycidylethers of polyoxyethylene glycol having a degree of polymerisation from three to one hundred and fifty, the corresponding polyoxypropylene glycols, and random or block copolymers of these, polyoxybutylene glycols, as well as low molar mass polyols such as trimethylol ethane, trimethylol propane, trimethylolbutane, erythritol, pentaerythritol, and ditrimethylol ethane, ditrimethylol propane, ditrimethylolbutane, dierythritol, and dipentaerythritol.

A further preferred multifunctional cyclocarbonate can be formed from lignin **L** where both phenolic hydroxyl groups and aliphatic hydroxyl groups are first converted to oxalkylated derivatives by reaction thereof with glycerol carbonate to create vicinal 1,2-diol structures, which diols **D** are then converted to cyclocarbonates by reaction thereof with linear carbonates such as dimethylcarbonate or diethylcarbonate, or by transesterification with cyclocarbonates such as ethylenecarbonate or propylenecarbonate. Kraft lignin, soda lignin, sulphite lignin, or the so-called organosolve lignin which latter is free from sulphur are preferably used in these reactions.

Other multifunctional cyclocarbonates can also be formed from tannins **T**. Tannins are a class of polyphenolic compounds that share a property, viz. binding to, and precipitation of, proteins and other classes of organic compounds such as amino acids and alkaloids. Their molar mass ranges from about 500 g/mol for esters of sugars and gallic or digallic acid, to about 20 kg/mol for proanthocyanidines. Basic chemical structures are derived from gallic acid (3,4,5-tri-hydroxybenzoic acid), 1,3,5-trihydroxybenzene (phloroglucinol), and flavan-3-ol. Naturally occurring tannins are found in leaf, bud, seed, root, and stem tissues. A structural differentiation for tannins has been proposed by Khanbabee and van Ree in Natural Product Reports 2001, vol. 18, pages 641 to 649, as Gallotannins, Ellagitannins, Complex Tannins and Condensed Tannins. Gallotannins are ester of gallic acid or its depsidic derivatives with (mostly sugar-based, catechin-based or terpenoid-based) polyols, Ellagitannins comprise acidic components based on ellagic acid (2,3,7,8-tetrahydroxy-chromeno{5,4,3,c,d,e]chromene-5,10-dione) and do not contain glycosidically linked catechin units, Complex Tannins are those in which a catechin unit is bound glycosidically to a gallotannin or ellagitannin unit, and Condensed Tannins are all oligomeric and polymeric proanthocyanidines formed via linkage of the C4-atom of one catechin unit with a C8- or C6-atom of the next monomeric catechin unit. The sugar-based polyols include, i.a., D-glucopyranose, D-hamamelose, sucrose, shikimic acid, and quercitols. They all comprise both phenolic and cycloaliphatic hydroxyl groups. Naturally occurring tannins are usually mixtures of at least two of these four classes. Like in lignins, their phenolic hydroxyl groups, and also aliphatic hydroxyl groups, are converted to cyclocarbonates by reaction with glycerolcarbonate to form bis-hydroxyethyl derivatives that are cyclised in the following step by reaction with a linear or branched dialkylcarbonate or a cyclic alkylenecarbonate to form multifunctional cyclocarbonates.

In the same way, also novolaks can be converted under consumption of at least two of their phenolic hydroxyl groups to multifunctional cyclocarbonates by reaction of novolaks with glycerol cyclocarbonate to form bishydroxyalkyl novolaks in the first step, which hydroxyalkyl novolaks are then transesterified in a second step with further linear or cyclic carbonate to form a multifunctional novolak cyclocarbonate.

It is also possible to use 1,3-diols to form cyclocarbonates **C6** that have six ring atoms (1,3-dioxane-2-ones), as depicted in Formula II 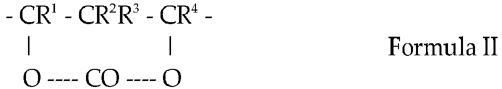 where each of R¹, R², R³ and R⁴ is independently selected from the group consisting of H and alkyl groups having from one to six carbon atoms.

The novolaks N which can be used in the invention are low molar mass polymers derived from phenol or alkylphenols, where the alkyl groups have from one to twenty carbon atoms, or mixtures of both wherein preferably, phenol and at least one alkylphenol are present in the mixture, and formaldehyde. The alkyl group is linear or branched. The novolaks N usually have a dropping temperature, as determined according to ASTM D566, of up to 150 °C, and preferably, a number average molar mass *M*ₙ of up to 2000 g/mol. This temperature, also referred to as "dropping point", is also determined according to the method described in DIN EN ISO 2176:1995 (published 1997-05) "Petroleum Products - Lubricating Grease - Determination of Dropping Point".

Crosslinked novolaks made by crosslinking novolaks N with multifunctional cyclocarbonates C or C6, or mixtures of both, can be used in the following applications: binders for abrasives, friction materials, mineral or stone fibres, refractories, textile felts, impregnation resins for paper, wood, fabricated wood, tissue and woven material,

Crosslinking is preferably effected by mixing the novolak **N** and the multifunctional cyclocarbonates **C** or **C6**, or mixtures of both, in mass ratios *m*_{N}/(*m*_{C} + *m*_{C6}) of from 0.1 to 10, preferably from 0.3 to 3, and most preferred, from 0.4 to 2.5, where *m*_{N} is the mass of the novolak **N**, and *m*_{C} + *m*_{C6} is the sum of the masses of the multifunctional cyclocarbonates **C** and **C6** used.

Crosslinked lignins made by crosslinking lignin L with multifunctional cyclocarbonates **C** or **C6**, or mixtures of both, can be used in the following applications: adhesives, impregnation resins for paper, wood, fabricated wood, tissue and woven material, and as binders for abrasives, friction materials, mineral or stone fibres, refractories, and textile felts.

Crosslinking is preferably effected by mixing the lignin **L** and the multifunctional cyclocarbonates **C** or **C6**, or mixtures of both, in mass ratios *m*_{L}(*m*_{C} + *m*_{C6}) of from 0.1 to 10, preferably from 0.3 to 3, and most preferred, from 0.4 to 2.5, where *m*_{L} is the mass of the lignin **L**, and *m*_{C} + *m*_{C6} is the sum of the masses of the multifunctional cyclocarbonates **C** and **C6** used.

The combination of lignin **L** as hydroxyfunctional organic compound with a curing agent which is a cyclocarbonate made from lignin is particularly preferred, as the similarity of both constituents leads to a homogeneous mixture of both constituents which facilitates the curing reaction. In the same way, the combination of a novolac resin with a multifunctional cyclocarbonate made from a novolakby reaction thereof with a monofunctional cyclocarbonate to form a hydroxyalkylated novolak which can then be reacted with a further dialkyl carbonate or alkylene carbonate to form a cyclocarbonated novolak has the same advantage of forming a homogeneous mixture of resin and curing agent. These two embodiments are therefore a preferred way of application of the inventive idea to a practical solution.

By using different chemical species as crosslinking agent, and as compound to be crosslinked, microheterogeneities can be created that impart a two-phase structure to the resulting crosslinked material that leads to improved toughness properties. Examples for formation of two-phase materials is a novolak that is crosslinked with a purely aliphatic multifunctional cyclocarbonate, such as those derived from epoxidised fatty oils, from dimer fatty acids such as those described in He,X. et al., Polymers 2018, 10, p. 262 et seq., and from epoxidised polydienes.

The organic compounds having phenolic hydroxyl groups that are cured or crosslinked with the multifunctional cyclic carbonates can also include low to intermediate molar mass compounds such as tannin **T** as mentioned supra, as tannin has also phenolic hydroxyl groups which easily react with cyclocarbonates under ring opening.

The invention is illustrated by the following examples which are not to be construed as limiting the scope of the invention.

### Examples

Lignins: Organosolv lignin was produced using a mixture of masses of 1 kg each of ethanol and of water in pulping of 0.5 kg of beech wood chips (OL) with a liquor to biomass mass ratio of 4:1, with an addition of 10 g of H₂SO₄ (0.5 % of the mass of the solvent mixture). The technical lignins from Kraft pulping processes were obtained from Suzano (spruce/pine, KL), the soda lignin (wheat straw, SL) was purchased from Green Value, and sulphite lignin was purchased from Tembec. The organosolve lignin was used if not mentioned otherwise.

Novolaks: products having three different dropping points (*T*_{D} = 114 °C; 128 °C; and 135 °C) have been used in the experiments. The values cited in the examples apply to a novolak of *T*_{D} = 128 °C, obtained from Prefere Resins Germany GmbH, Novolak DP 128.

### Examples with novolak and multifunctional cyclic carbonates

### Example 1

In a series of experiments, the mass ratios of the constituents in a mixture of novolak, poly(ethyleneglycol) dipropylene carbonate and 1,8-diazabicyclo[5.4.0]undec-7-ene ("DBU") were varied (from 1.0 g to 5.0 g of novolak, from 1.0 g to 5.0 g of poly(ethyleneglycol) dipropylene carbonate, and from 0 g to 0.1 g of DBU). The mixtures were completely cured by heating to 190 °C for 1 h. The obtained products showed very low solubility in water, ethanol and acetone.

### Example 2

In a series of experiments, the mass ratios of the constituents in a mixture of novolak, trimethylolpropane tripropylenecarbonate and DBU were varied (from 1.0 g to 5.0 g of novolak, from 1.0 g to 5.0 g of trimethylolpropane tripropylenecarbonate, and from 0 g to 0.1 g of DBU). The mixtures were completely cured by heating to 190 °C for 1 h. The obtained products showed very low solubility in water, ethanol and acetone.

### Example 3

In a series of experiments, the mass ratios of the constituents in a mixture of novolak, carbonated soybean oil and DBU were varied (from 1.0 g to 5.0 g of novolak, from 1.0 g to 5.0 g of carbonated soybean oil, and from 0 g to 0.1 g of DBU). The mixtures were completely cured by heating to 190 °C for 1 h. The obtained products showed very low solubility in water, ethanol and acetone.

### Example 4

A mixture of 0.83 g of novolak, 1.3 g of trimethylolpropane tripropylenecarbonate, and 0.15 g DBU was completely cured by heating to 190 °C for 1 h. Adhesive strength tests with corresponding mixtures showed very good results.

### Example 5

A mixture of 0.90 g of novolak, 1.1 g of poly(ethyleneglycol) dipropylenecarbonate, and 0.15 g of DBU was completely cured by heating to 190 °C for 1 h. Adhesive strength tests with corresponding mixtures showed very good results.

### Example 6

A mixture of 0.90 g of novolak, 1.2 g of carbonated soybean oil, and 0.15 g of DBU was completely cured at 190 °C for 1 h. Adhesive strength tests with corresponding mixtures showed good results.

### Example 7

A mixture of 0.80 g of novolak, 1.2 g of trimethylolpropane tripropylene carbonate, and 0.05 g of DBU was completely cured by heating to 190 °C for 1 h. Adhesive strength tests with corresponding mixtures showed good results.

### Example 8

A mixture of 1.0 g of novolak, 1.0 g of poly(ethyleneglycol) dipropylenecarbonate, and 0.05 g of DBU was completely cured by heating to 190 °C for 1 h. Adhesive strength tests with corresponding mixtures showed good results.

### Examples with lignin and multifunctional cyclic carbonates

### Example 9

A mixture of 3.0 g of lignin, 1.5 g of poly(ethyleneglycol) dipropylenecarbonate and 0.1 g of DBU was stirred at 170 °C for 8 h. The product mixture was washed several times with DMSO as well as water and dried in a vacuum oven at 30 °C. The yield of the obtained polymer product was 77 % (3.45 g).

### Example 10

A mixture of 0.75 g of lignin, 1.5 g of poly(ethyleneglycol) dipropylenecarbonate and 0.05 g of DBU was stirred at 170 °C for 5 h. The product mixture was washed several times with DMSO as well as water and dried in a vacuum oven at 30 °C. The yield of the obtained polymer product was 66 % (1.48 g).

### Example 11

A mixture of 0.77 g of lignin, 1.6 g of carbonated soybean oil and 0.05 g of DBU was stirred at 170 °C for 8 h. The product mixture was washed several times with DMSO as well as water and dried in a vacuum oven at 30 °C. The yield of the obtained polymer product was 21 % (0.50 g).

### Examples of single step syntheses of carbonate modified lignin prepolymers

### Example 12

A mixture of 30.0 g of lignin, 203 g of poly(ethyleneglycol) dipropylenecarbonate, and 1.00 g of DBU was stirred at 170 °C for 12 h. This single step reaction led to a highly viscous fluid. SEC elugrams showed that the molar mass of the obtained product is a multiple of the molar mass of the used lignin. FTIR analyses showed that the product contained multiple cyclic carbonate functionalities. Therefore it is suitable as prepolymer for further reactions.

### Example 13

A mixture of 16.3 g of lignin, 225 g of trimethylolpropane tripropylenecarbonate, and 1.00 g of DBU was stirred at 170 °C for 12 h. A highly viscous resin with multiple cyclic carbonate functionalities and highly increased molar mass was obtained.

### Example 14

A mixture of 19.2 g of lignin, 183 g of carbonated soybean oil, and 1.00 g DBU was stirred at 170 °C for 12 h. A viscous resin with multiple cyclic carbonate functionalities and increased molar mass was obtained.

### Example 15

In a series of experiments, the mass ratios of the constituents in a mixture of lignin, poly(ethyleneglycol) dipropylene carbonate and DBU were varied (10 g of lignin, from 50 g to 150 g of poly(ethyleneglycol) dipropylenecarbonate, and from 0.2 g to 0.6 g of DBU). All obtained products are viscous fluids with increased molar masses and feature multiple cyclic carbonate functionalities. It could be shown that the viscosity depends on the mass ratio of the constituents of the starting mixture. The lower the amount of poly(ethyleneglycol) carbonate, the higher the viscosity of the product.

### Examples with novolak and carbonate modified lignin prepolymers

### Example 16

A mixture of 1.0 g of novolak, 1.0 g of carbonate modified lignin prepolymers, and 20 mg of DBU was completely cured at 220 °C for 30 min. The obtained products showed low solubility in water, ethanol, DMSO and acetone. The DSC thermogram of a corresponding mixture shows an exothermic signal in a temperature range from 190 °C to 240 °C.

### Example 17

A mixture of 1.0 g of novolak, 1.0 g of carbonate modified lignin prepolymers, and 40 mg of DBU was completely cured at 220 °C for 30 min. The obtained products showed low solubility in water, ethanol, DMSO and acetone. The DSC thermogram of a corresponding mixture shows an exothermic signal in a temperature range from 180 °C to 230 °C.

### Examples with lignin and carbonate modified lignin prepolymers

### Example 18

A mixture of 1.0 g of carbonate modified lignin prepolymer, 1.0 g of unmodified lignin, 1.0 g of trimethylolpropane tripropylenecarbonate, and 0.1 g of tetra-n-butylammoniumbromide ("TBAB") was completely cured by heating to 170 °C for 9 min. Adhesive strength tests with corresponding mixtures showed good results.

### Example 19

A mixture of 1.0 g of carbonate modified lignin prepolymer, 1.0 g of unmodified lignin, 1.5 g of trimethylolpropane tripropylenecarbonate, 1.0 g of soy protein isolate, 0.5 g of adipic acid, and 0.2 g of KOH was completely cured by heating to 170 °C for 9 min. Adhesive strength tests with corresponding mixtures showed good results.

### Example 20

A mixture of 1.5 g of carbonate modified lignin prepolymer, 1.0 g of unmodified lignin, 1.5 g of trimethylolpropane tripropylenecarbonate, 1.0 g of chickpea flour, and 0.2 g of KOH was completely cured by heating to 170 °C for 9 min. Adhesive strength tests with corresponding mixtures showed good results.

### Examples with tannin and carbonate modified lignin prepolymers

### Example 21

A mixture of 1.0 g of carbonate modified lignin prepolymer, 1.0 g of unmodified tannin, 1.0 g of trimethylolpropane tripropylenecarbonate, and 0.4 g of DBU was completely cured by heating to 190 °C for 30 min. The DSC thermogram of a corresponding mixture shows an exothermic signal in a temperature range from 130 °C to 230 °C.

### Example 22

A mixture of 1.0 g of carbonate modified lignin prepolymer, 1.0 g of unmodified tannin, 1.0 g of trimethylolpropane tripropylenecarbonate, and 0.2 g of DBU was completely cured by heating to 190 °C for 30 min. The DSC thermogram of a corresponding mixture shows an exothermic signal in a temperature range from 140 °C to 240 °C.

### Examples with variation of the amount of the catalyst

### Example 23

In a series of experiments, the amount of the catalyst DBU was varied from 0 g to 0.40 g in a mixture of 0.10 g of lignin and 0.15 g of trimethylolpropane tripropylenecarbonate. The DSC thermograms show a significant dependence on the amount of the catalyst. The higher the amount of the catalyst, the lower is the temperature of the exothermic signals indicating the crosslinking reaction. The exothermic DSC signals range from 130 °C to 240 °C. The intensity of the exothermic signals also increases with an increasing amount of catalyst.

### Example 24

In a series of experiments, the amount of the catalyst DBU was varied from 0 g to 0.40 g in a mixture of 0.10 g of lignin and 0.15 g of poly(ethyleneglycol) dipropylenecarbonate. The DSC thermograms show a significant dependence on the amount of the catalyst. The higher the amount of the catalyst, the lower is the temperature of the exothermic signals indicating the crosslinking reaction. The exothermic DSC signals range from 130 °C to 240 °C. The intensity of the exothermic signals also increases with an increasing amount of catalyst.

### Example 25

In a series of experiments, the amount of the catalyst DBU was varied from 0 g to 0.40 g in a mixture of 0.10 g of novolak and 0.15 g of trimethylolpropane tripropylene carbonate. The DSC thermograms show a significant dependency on the amount of the catalyst. The higher the amount of the catalyst, the lower is the temperature of the exothermic signals indicating the crosslinking reaction. The exothermic DSC signals range from 130 °C to 240 °C. The intensity of the exothermic signals also increases with an increasing amount of catalyst.

### Example 26

In a series of experiments, the amount of the catalyst DBU was varied from 0 g to 0.40 g in a mixture of 0.10 g of novolak and 0.15 g of poly(ethyleneglycol) dipropylenecarbonate. The DSC thermograms show a significant dependence on the amount of the catalyst. The higher the amount of the catalyst, the lower is the temperature of the exothermic signals indicating the crosslinking reaction. The exothermic DSC signals range from 130 °C to 240 °C. The intensity of the exothermic signals also increases with an increasing amount of catalyst.

## Claims

1. A curable mixture comprising at least one organic compound having phenolic hydroxyl groups and at least one multifunctional cyclic organic carbonate **C** as crosslinking agent.

2. The curable mixture of claim 1 wherein the organic compound having phenolic hydroxyl groups is a novolak **N**, a tannin **T**, or a lignin **L**.

3. The curable mixture of claim 2 wherein the novolak **N** is made by reaction of phenol C₆H₅OH and formaldehyde HCHO.

4. The curable mixture of claim 2 wherein the the novolak **N** is made by reaction of a mixture of phenol C₆H₅0H with at least one alkylphenol having from one to twenty carbon atoms in the alkyl group, and formaldehyde HCHO.

5. The curable mixture of claim 2 wherein the lignin **L** is selected from the group consisting of Kraft lignin, soda lignin, sulphite lignin, and organosolve lignin.

6. The curable mixture of any of claims 1 to 5 wherein the multifunctional cyclic organic carbonate **C** has at least two cyclocarbonate structures in its molecule, wherein the cyclocarbonate structures obey the formula 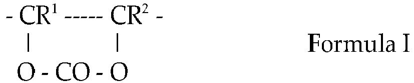 where R¹ and R² are independently of each other selected from the group consisting of H and alkyl groups having from one to six carbon atoms.

7. The curable mixture of any of claims 1 to 5 wherein the multifunctional cyclocarbonate is a cyclocarbonate **C6** that has six ring atoms (1,3-dioxane-2-ones), as depicted in Formula II 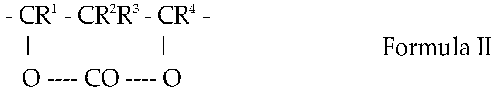 where each of R¹, R², R³ and R⁴ is independently selected from the group consisting of H and alkyl groups having from one to six carbon atoms.

8. The curable mixture of claim 6 wherein any of claims 1 to 5 wherein the multifunctional cyclic organic carbonate is obtainable from a multifunctional epoxide by insertion of carbon dioxide into multifunctional epoxides **E**, or by reaction of vicinal diols **D** having at least two sets of vicinal diol groups, with a dialkyl carbonate or a monofunctional cyclocarbonate.

9. The curable mixture of claim 8 wherein the epoxide **E** is selected from the group consisting of a novolak which is etherified with an average of at least two molecules of glycidol, an epoxy resin obtainable by reacting a multifunctional hydroxyaromatic compound with epichlorohydrin or with a multifunctional epoxide based on aromatic or aliphatic multifunctional hydroxy compounds, and multifunctional epoxidised olefin oligomers or polymers, and multifunctional epoxidised vegetable oils, wherein the word multifunctional always means at least two functionalities.

10. The curable mixture of claim 8 wherein a multifunctional vicinal diol **D** is made from a lignin **L** or from a tannin **T** by reaction thereof with a hydroxyfunctional cyclic carbonate to lead to a bis(hydroxyalkyl) derivate having at least two bis(hydroxyalkyl) groups per molecule.

11. The curable mixture of claim 10 where the hydroxyfunctional cyclic carbonate is glycerol carbonate.

12. A method of curing the curable mixture of any of claims 1 to 11, which comprises reacting the said organic compound with at least one multifunctional cyclic organic carbonate **C** wherein in mass ratio *m*_{O}/*m*_{CC} is from 0.1 to 10, where *m*_{O} is the mass of the organic compound, and *m*_{CC} is the mass of the multifunctional cyclocarbonates **CC** used.

13. Binders for coating compositions, adhesive compositions, or filler compositions comprising the curable mixture as claimed in any of claims 1 to 11.
